# EUROPÄISCHE PATENTSCHRIFT

(11) **EP 0 790 877 B1**
(45) Veröffentlichungstag und Bekanntmachung des Hinweises auf die Patenterteilung: **24.02.1999**
(21) Anmeldenummer: 95937062.8
(22) Anmeldetag: 10.11.1995
(51) Int. Cl.: B23B 51/02

(54) **BOHRWERKZEUG**
BORING TOOL
OUTIL DE PERCAGE

(30) Priorität: 10.11.1994 DE 4440074
(43) Veröffentlichungstag der Anmeldung: 27.08.1997
(73) Patentinhaber: KENNAMETAL INC., Latrobe, PA 15650-0231 (US)
(72) Erfinder: KRENZER, Ulrich, D-90513 Zirndorf (DE)
(74) Vertreter: Tergau, Enno, Dipl.-Ing.
(86) Internationale Anmeldenummer: EP9504425
(87) Internationale Veröffentlichungsnummer: WO9614954

(56) Entgegenhaltungen:
- EP-A- 0 549 548
- GB-A- 2 259 263
- US-A- 4 679 971
- US-A- 4 961 672
- US-A- 5 160 232

## Beschreibung

Die Erfindung betrifft ein Bohrwerkzeug, insbesondere einen Bohrer mit Spannuten zur Spanabführung, dessen Bohrerschneiden durch Einweg-Schneidkörper gebildet sind. Bei Bohrern tritt allgemein das Problem auf, daß das Material des Bohrers einerseits genügend hart- und verschleißfest sein muß, damit im Schneidenbereich des Bohrers die gewünschte spanabhebende Wirkung über einen längeren Zeitraum gewährleistet ist. Andererseits muß aber der Bohrerkörper genügend Zähigkeit aufweisen, um den Torsionsschwingungen während des Bohrens standzuhalten. Bei den vorbezeichneten Bohrern wird dieses Problem dadurch gelöst, daß der Bohrerkörper aus einem den genannten Schwingungen standhaltenden, eher zähen, dafür aber weniger verschleißfesten Material gefertigt und die Bohrerschneiden durch Einweg-Schneidkörper gebildet sind. Solche Einweg-Schneidkörper sind meist als sog. Wendeplatten ausgebildet. Im folgenden wird der Einfachheit halber von Wendeplatten gesprochen. Bei Bohrern wird der aus einem Werkstückmaterial abgehobene Span, nachdem er durch die Spanfläche der Wendeplatte in Spanablaufrichtung umgebogen wurde, in mehr oder weniger steilem Winkel auf die Spannutwand gelenkt und dort zu einer Wendel bzw. einer Spanlocke umgeformt. Ziel der Umformung ist es, einen Spanwendel zu erzeugen, dessen Durchmesser kleiner ist als die Spankammertiefe d.h. der Radialabstand zwischen dem Bohrerkern und der vom Bohrer gebildeten Bohrlochwand. Ein derart geformter Spanwendel kommt nämlich nur unwesentlich mit der Bohrlochwand in Berührung, er wird hauptsächlich mit Reibung an der Spannutwand weitertransportiert. Die Oberfläche der Bohrlochwand wird dadurch geschont.

Aufgrund des weniger verschleißfesten Materials des Bohrerkörpers unterliegt aber der für die genannte Umformung des Spans wirksame Spanformbereich einem erhöhten Verschleiß. Während die Wendeplatten für relativ hohe Standzeiten ausgelegt sind, bewirkt der genannte Verschleiß, daß der Spanformbereich unkontrolliert verändert, insbesondere konkav ausgewaschen wird. Die ursprüngliche Spanformeigenschaften des Spanformbereiches gehen dadurch verloren. Dies führt z.B. dazu, daß der Span auf die Bohrlochwand gelenkt wird und beim Spanabtransport an dieser reibt, wodurch die Oberflächenqualität der Bohrlochwand verschlechtert wird. Durch den Verschleiß des Spanformbereiches kann es auch zum Bruch des Spanes kommen. Die Spanbruchstücke können sich in der von der Spannut - und der Bohrlochwand gebildeten Spankammer verkeilen und ebenfalls die Oberflächengüte der Bohrlochwandung beeinträchtigen. Es können gar Spanbruchstücke zwischen Bohrer und Bohrlochwand eingeklemmt werden, was eine starke Erhitzung und schließlich ein 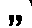 Verschweißen" des Bohrers bewirkt. In DE 42 41 140 A1 ist ein Bohrer beschrieben, bei dem der für die Spanform verantwortliche Bereich der Spannut durch einen Quantenenergieprozeß gehärtet ist. Nachteilig bei diesem Bohrer ist, daß das Material des Bohrerkörpers für eine entsprechende Härtung geeignet sein muß und daß dadurch die Materialauswahl eingeschränkt ist.

Die Aufgabe der Erfindung ist es, einen Bohrer vorzuschlagen, bei dem der für die Spanform entscheidende Spanformbereich auf eine alternative Weise ausgebildet ist.

Diese Aufgabe wird durch die Merkmalskombination des Anspruches 1 gelöst. Danach ist der sich etwa in Spanablaufrichtung seitlich an die Spanflächen der Bohrerhauptschneiden bzw. die Deckflächen der Wendeplatten anschließende Spanformbereich durch zumindest einen separaten Verschleißschutzkörper gebildet. Je nach Güte des verschleißfesten Materials kann dadurch die Standzeit des Bohrerkörpers so verbessert werden kann, daß sie erheblich größer als die der Wendeplatten ist. Die Form und die Oberflächengüte des Spanformbereiches und damit dessen Spanformungseigenschaften bleiben während der Gebrauchsdauer des Bohrers praktisch unverändert.

Der Spanformbereich ist dadurch gebildet, daß ein Verschleißschutzkörper aus einem entsprechenden Material in die Spannut eingesetzt ist. Der Verschleißschutzkörper kann dabei so angeordnet sein, daß seine Oberfläche mit der Oberfläche der an ihn angrenzenden Spannutwand fluchtet und insgesamt eine Fläche mit einem kontinuierlichen Verlauf gebildet wird. Der Verschleißschutzkörper steht dann also nicht erhaben aus der Spannutwand hervor, sondern fügt sich quasi einebig und praktisch ohne Stufenbildung in den Krümmungsverlauf der Spannutwand ein. Es kann aber vorteilhaft sein, wenn der Verschleißschutzkörper aus der Spannutwand hervorragt und dann praktisch alleine für die Spanformung wirksam ist. Dies vereinfacht die Herstellung des Bohrers, da beim Einfräsen der Spannut auf einen für die Spanformung geeigneten Krümmungsverlauf der Spannutwand nicht geachtet werden muß. Soll nämlich zwischen der Spanfläche der Wendeplatten und der zugeordneten Spannutwand ein Winkel weniger als 90° gebildet werden, so ist dies nur unter erhöhtem fertigungstechnischen Aufwand mit Spezialfräsern möglich. Wird jedoch ein erfindungsgemäßer Verschleißschutzkörper mit einer für die Spanformung geeigneten konkav gekrümmten Oberfläche im Spanformbereich der Spannut eingesetzt, kann der Krümmungsverlauf der Spannutwand einfacher gestaltet sein. Insbesondere können zwischen der Spanfläche der Wendeplatte und der zugeordneten Spanwand sogar größere Winkel als 90° gebildet sein, da die Spanformung unabhängig vom Krümmungsverlauf der Spannutwand allein durch die konkav gekrümmte und aus der Spannutwand erhaben vorstehende Oberfläche des Verscnleißschutzkörpers erfolgt.

Die Krümmung des Spanformbereiches bzw. des Verschleißschutzkörpers ist so gewählt, daß der zur Spanformung wirksame Spanformradius einen maximalen Wert hat, der einem Viertel der Differenz aus dem Durchmesser und dem Kerndurchmesser des Bohrers entspricht. Mit einem solchen Spanformradius ist gewährleistet, daß der Durchmesser des gebildeten Spanwendels kleiner ist, als die Spankammertiefe, d.h., der Radialabstand zwischen Bohrerkern und Bohrungswand.

Der Verschleißschutzkörper besteht vorzugsweise aus einem Hartmetall oder einem Hartstoff und ist lösbar in der Spannut befestigt. Er kann dadurch entweder bei Verschleiß ausgewechselt werden oder wiedergewonnen werden, um damit andere Bohrer zu bestücken. Vorteilhaft ist auch, daß für die Bearbeitung verschiedener Werkstoffe unterschiedliche, dem jeweiligen Spanformverhalten der Werkstoffe angepaßte Verschleißschutzkörper bei ein und demselben Bohrer eingesetzt werden können. Die Befestigung des Verschleißschutzkörpers wird in vorteilhafter Weise dadurch bewerkstelligt, daß er von der Bohrerspitze her in eine nutartige Ausnehmung der Spannut eingesetzt ist. Eine solche Ausnehmung läßt sich fertigungstechnisch auf relativ einfache Weise herstellen und gewährleistet einen festen Sitz des Verschleißschutzkörpers. Dies insbesondere dann, wenn die Breite der Nut zum Bohrerschaft hin abnimmt, d.h. also, wenn sie keilförmig ausgebildet ist und der Verschleißschutzkörper darin formund reibungsschlüssig eingepreßt ist. Um den Verschleißschutzkörper in seiner Lage zu fixieren, kann es vorteilhaft sein, wenn von der Bohrerspitze her Sicherungsschrauben in den Bohrerkörper eingebracht sind. Diese Sicherungsschrauben halten mit ihrem Kopf den Verschleißschutzkörper in seiner Position. Ein besonders zuverlässige Fixierung wird durch einen im wesentlichen schwalbenschwanzförmigen Keilsitz des Verschleißschutzkörpers in der ihn aufnehmenden Ausnehmens erreicht.

Die Oberfläche des Verschleißschutzkörpers bzw. des Spanformbereiches ist vorzugsweise mit nach Art von Gleitkufen wirksamen Führungsrippen versehen. Die Führungsrippen sind parallel zueinander angeordnet, verlaufen im wesentlichen in der natürlichen Spanablaufrichtung und erstrecken sich vorzugsweise über die gesamte Breite des Verschleißschutzkörpers. Durch die Führungsrippen wird das bogenförmige Abfließen der Späne in Spanablaufrichtung unterstützt. Die Führungsrippen wirken dabei nach Art von Gleitkufen, die sich, je nach Festigkeit des bearbeiteten Werkstückmaterials, auch in gewissem Ausmaß in den Span eindrücken können, wodurch die Gleitkufenwirkung verstärkt wird.

Die Erfindung wird nun anhand von in den Zeichnungen dargestellten Ausführungsbeispielen näher erläutert. Es zeigen:
- Fig.1: eine Seitenansicht eines erfindungsgemäßen Bohrers,
- Fig.2: einen Ausschnitt entsprechend der Linie II in Fig. 1,
- Fig.3: eine Ansicht in Richtung des Pfeiles III in Fig.1,
- Fig.4: einen einzelnen Verschleißschutzkörper,
- Fig.5: einen Querschnitt entsprechend der Linie V-V in Fig.4,
- Fig.6: eine Ansicht in Richtung des Pfeiles VI in Fig.4,
- Fig.7: eine Ansicht gemäß Fig.3 eines Bohrers, bei dem die Verschleißschutzkörper nicht durch Sicherungsschrauben gesichert sind, und
- Fig.8: eine weitere Ausführungsform eines erfindungsgemäßen Bohrers in einer Ansicht entsprechend Fig.7.

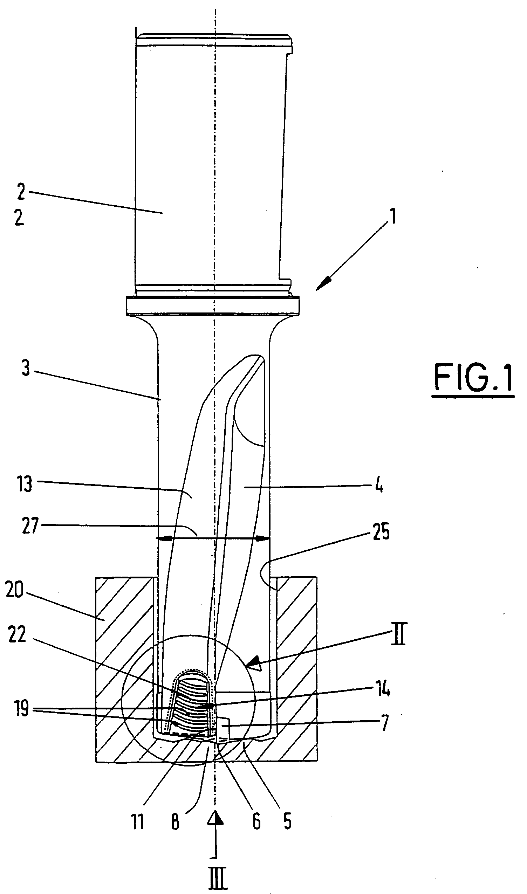

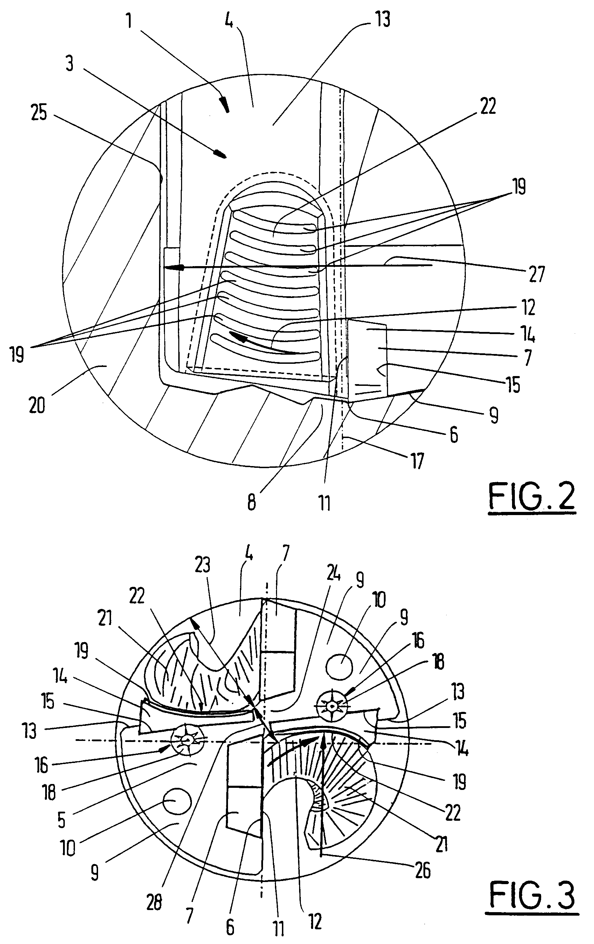

Der in Fig.1 dargestellte und insgesamt mit dem Bezugszeichen 1 bezeichnete Bohrer weist einen Bohrerkörper auf, der sich in einen Schaft 2 und ein Schneidteil 3 gliedert. In dem Schneidteil 3 sind diametral gegenüberliegend zwei Spannuten 4 eingelassen, die sich in einem leicht schrägen bzw. wendelförmigen Verlauf nahezu über die gesamte Länge des Schneidteils 3 erstrecken und in die Stirnseite 5 des Bohrers münden. Die Bohrerhauptschneiden 6 sind von Einweg-Schneidkörpern, vorzugsweise Wendeplatten 7 gebildet. Die Wendeplatten 7 sind von der Stirnseite 5 bzw. der Bohrerspitze 8 her in eine nutartige Ausnehmung des im wesentlichen zylindrischen Schneidteils 3 eingesetzt und dort auf geeignete Weise, insbesondere durch eine Verschraubung, befestigt. In der Stirnseite 5, genauer gesagt in den Freiflächen 9 (Fig.3) der Hauptschneiden 6 mündet jeweils ein Bohrmittelkanal 10, durch den ein Kühl- bzw. Schmiermittel dem Wirkbereich der Bohrerspitze zuführbar ist. Die Spanflächen 11 der Bohrerhauptschneiden 6 entsprechen im wesentlichen den Deckflächen der Wendeplatten.

Etwa in Spanablaufrichtung 12 schließt sich seitlich an die Spanflächen 11 ein Bereich der Spannutwand 13 an, der im Querschnitt bzw. in der Aufsicht gemäß Fig.3 gesehen einen konkaven Krümmungsverlauf aufweist und zur Spanformung dient. Dieser Spanformbereich 22 wird durch einen Verschleißschutzkörper 14 gebildet. Der Verschleißschutzkörper liegt in einer zur Bohrerspitze hin offenen Aufnahmenut 15 formund reibungsschlüssig ein. Die Formschlußverbindung zwischen Verschleißschutzkörper 14 und Schneidteil 3 ist nach Art eines schwalbenschwanzförmigen Keilsitzes ausgebildet. Die Breite der Nut bzw. die Breite des Verschleißschutzkörpers 14 nimmt von der Bohrerspitze 8 zum Schaft 2 hin kontinuierlich ab. Aufnahmenut 15 und Verschleißschutzkörper 14 sind daher etwa keilförmig ausgebildet. Die Verschleißschutzkörper 14 sind durch Sicherungsschrauben 16 gesichert. Die Sicherungsschrauben 16 sind von der Bohrerspitze 8 her in die Freiflächen 9 in Richtung der Bohrachse 17 des Bohrers 1 eingedreht und halten mit ihrem Schraubenkopf 18 die Verschleißschutzkörper 14 in ihrer Position, bzw. pressen sie in die sich keilförmig verjüngende Aufnahmenut 15.

Die Oberfläche der Verschleißschutzkörper 14 ist konkav gekrümmt und mit rippenartigen Vorsprüngen, nämlich Führungsrippen 19 versehen. Die Verschleißschutzkörper 14 sind derart in die Spannutwand 13 eingesetzt, daß sie aus deren Oberfläche erhaben vorstehen. Die Führungsrippen 19 erstrecken sich nahezu über die gesamte Breite der Verschleißschutzkörper und sind etwa mit gleichem Abstand in Richtung der Bohrachse 17 des Bohrers 1 angeordnet. Sie haben einen etwa bananenartig gekrümmten, in Spanablaufrichtung 12 zunächst etwa radial zur Bohrerachse 17 ausgerichteten und mit zunehmender Entfernung von der zugeordneten Hauptschneide 6 von der Bohrerspitze 8 weggebogenen Verlauf.

Der erfindungsgemäße Bohrer arbeitet wie folgt:
Beim Bohren in das Vollmaterial eines Werkstückes 20 (Fig.1,2) wird durch die Hauptschneiden 6 des Bohrers 1 ein Span 21 abgehoben. Der Span 21 wird zunächst von der Spanfläche 11 bzw. der Deckfläche der Wendeplatte 7 etwa in Spanablaufrichtung 12 umgelenkt. Der Span trifft dann auf den sich seitlich an die Spanfläche anschließenden und für die Spanformung verantwortlichen Spanumformbereich 22 der Spannutwand 13. Der Spanumformbereich 22 ist nun beim erfindungsgemäßen Bohrer nicht durch die Spannutwand 13 selbst, sondern durch den Verschleißschutzkörper 14 gebildet. Dieser steht, wie gesagt, erhaben aus der Spannutwand hervor und weist einen Krümmungsverlauf auf, der dem Span eine locken- bzw. wendelartige Form verleiht. Der kleinste Radius des Spanformbereiches 22 bzw. der konkav gekrümmten Oberfläche des Verschleißschutzkörpers 14, nämlich der Spanformradius 26, ist für die Spanformung in erster Linie entscheidend. Er ist so gewählt, daß der gebildete Spanwende einen Durchmesser aufweist, der kleiner ist als die Spankammertiefe 23. Die Spankammertiefe 23 ist der Radialabstand zwischen dem Bohrerkern 24 und der Bohrlochwand 25. Um eine derartige Formbildung des Spans zu gewährleisten, sollte der Wert des Spanformradius 26 nicht größer sein, als ein Viertel der Differenz zwischen Bohrerdurchmesser 27 (Fig. 1) und Kerndurchmesser 28 (Fig.3). Bei einem erfindungsgemäßen Bohrer kommt somit der Span 21 im spitzennahen Bereich mit der Spannutwand 13 überhaupt nicht in Berührung. Die Spannutwand 13 ist dadurch vor einem Verschleiß durch auf sie auftreffende Späne 21 geschützt. Der Verschleißschutzkörper 14 selbst ist aus einem Hartmetall oder einem Hartstoff gefertigt. Die auf seiner konkav gekrümmten und den Spanformbereich bildenden Oberfläche vorhandenen Führungsrippen 19 erleichtern das Abfließen des Spans 21, da sie zum einen die Berührungsfläche zwischen dem Span und dem Verschleißschutzkörper 14 verringern und zum anderen nach Art von Gleitkufen den Abfluß des Spans 21 in Spanablaufrichtung unterstützen.

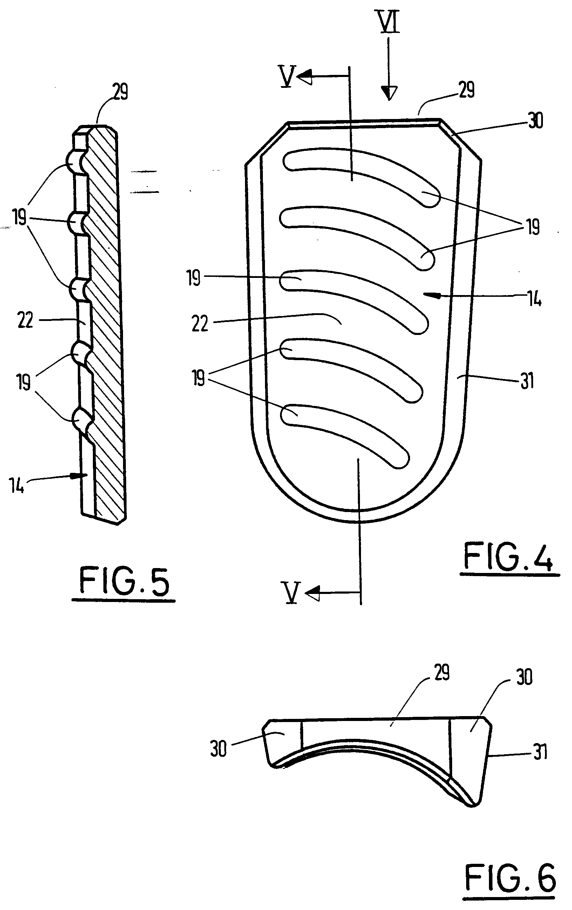

Der Verschleißschutzkörper 14 ist, wie etwa aus Fig.5 ersichtlich ist, ein einstückiges Teil. Er kann zweckmäßigerweise durch einen Sintervorgang hergestellt sein. Die im Montagezustand der Bohrerspitze 8 zugewandte Stirnfläche 29 des Verschleißschutzkörpers 14 ist beidseitig nach Art einer Schrägschulter 30 abgeschrägt. Aus Fig.6 ist erkennbar, daß die Seitenfläche 31 des Verschleißschutzkörpers 14 zu seiner konkav gekrümmten Oberfläche hin konvergieren. Dadurch ist ein schwalbenschwanzartiger Keilsitz des Verschleißschutzkörpers 14 in der entsprechend ausgestalteten Aufnahmenut 15 gewährleistet.

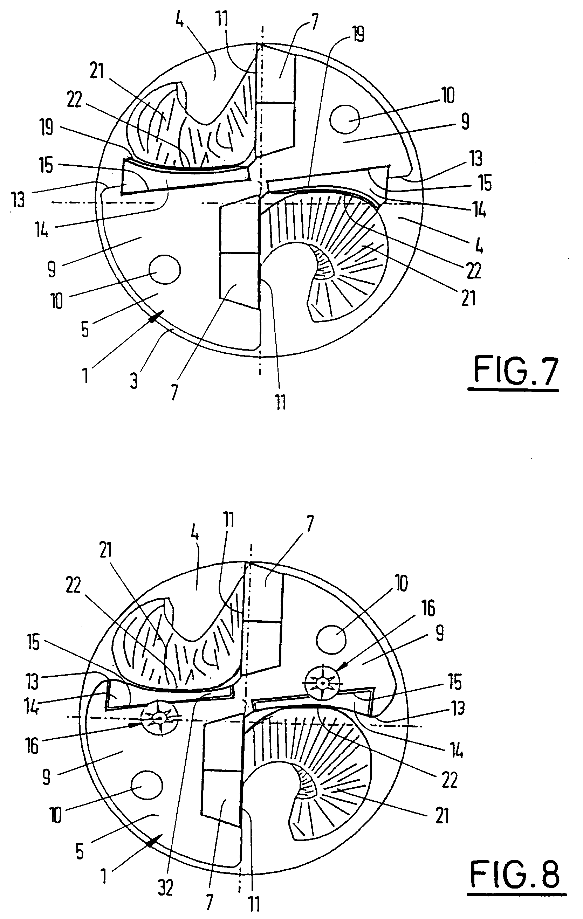

Das Ausführungsbeispiel gemäß Fig.7 unterscheidet sich von dem bisher beschriebenen nur dadurch, daß die Sicherungsschrauben zur Fixierung der Verschleißschutzkörper 14 fehlen. Die Fixierung erfolgt hier beispielsweise durch eine Verklebung oder ein Verlötung. Diese Stoffschlußverbindung ist etwa durch Einwirkung von Temperatur oder im Falle eines Klebstoffes von chemischen Lösungsmitteln wieder lösbar.

Bei dem in Fig.8 dargestellten Ausführungsbeispiel sind die Verschleißschutzkörper 14 vollständig in die Spannutwand 13 eingelassen. Ihre konkav gekrümmte, den Spanformbereich 22 bildende Oberfläche steht nicht aus der Spannutwand 13 hervor, ist also mit der angrenzenden Spannutwand 15 fluchtend angeordnet. Diese Ausführungsform kann dann vorteilhaft sein, wenn der Spanformbereich 22 nicht in seiner gesamten Breite vor einem Verschleiß geschützt werden soll. Es kann ausreichend sein, nur den dem größten Verschleiß ausgesetzten Bereich des Spanumformbereiches 22, etwa den der Spanfläche 11 nahegelegenen Bereich 32, durch einen Verschleißschutzkörper 14 zu schützen.

## Patentansprüche

1. Bohrwerkzeug, insbesondere mit die Bohrerschneiden bildenden Einweg-Schneidkörpern ausgebildeter Bohrer mit einem ßohrerkörper und darin eingelassenen Spannuten zur Spanabführung,
dadurch gekennzeichnet,
daß der sich etwa in Spanablaufrichtung (12) seitlich an die Spanflächen (11) der Bohrer-Hauptschneiden (6) anschließende Spanformbereich (22) durch zumindest einen separaten Verschleißschutzkörper (14) gebildet ist.

2. Bohrwerkzeug nach Anspruch 1
gekennzeichnet durch
eine lösbare Anordnung des bzw. der Verschleißschutzkörper (14).

3. Bohrwerkzeug nach Anspruch 1 oder 2,
dadurch gekennzeichnet,
daß der Maximalwert des zur Spanformung wirksamen Spanformradius (26) des Spanformbereichs (22) ein Viertel der Differenz zwischen dem Durchmesser und dem Kerndurchmesser (28) des Bohrwerkzeugs beträgt.

4. Bohrwerkzeug nach einem der Ansprüche 1 bis 3
dadurch gekennzeichnet,
daß die Verschleißschutzkörper (14) aus einem Hartmetall oder einem Hartstoff bestehen.

5. Bohrwerkzeug nach einem der Ansprüche 1 bis 4,
dadurch gekennzeichnet,
daß jeweils ein Verschleißschutzkörper (14) in einer zur Bohrerspitze (8) hin offene nutartige Ausnehmung (15) der Spannut (4) einliegt.

6. Bohrwerkzeug nach Anspruch 5,
gekennzeichnet durch
eine keilförmige Ausbildung des Verschleißschutzkörpers (14) derart, daß er von der Bohrerspitze (8) aus in eine keilförmige Nut form- und reibungsschlüssig eingepreßt ist.

7. Bohrwerkzeug nach einem der Ansprüche 1 bis 6,
gekennzeichnet durch
von der Bohrerspitze (8) her in den Bohrerkörper eingebrachte Sicherungsschrauben (16) zur Lagefixierung der Verschleißschutzkörper (14).

8. Bohnwerkzeug nach einem der Ansprüche 1 bis 7,
gekennzeichnet durch
einen im wesentlichen schwalbenschwanzförmigen Keilsitz des Verschleißschutzkörpers (14) in dem an die Spannut angrenzenden Teil des Bohrerkörpers.

9. Bohrwerkzeug nach einem der vorhergehenden Ansprüche,
dadurch gekennzeichnet,
daß die Oberfläche des Verschleißschutzkörpers (14) nach Art von Gleitkufen wirksame, etwa parallel zueinander angeordnete und im wesentlichen in Spanablaufrichtung (12) verlaufende Führungsrippen (19) enthält.

10. Bohrwerkzeug nach Anspruch 9,
dadurch gekennzeichnet,
daß die Führungsrippen (19) sich über die gesamte Breite des Verschleißschutzkörpers (14) erstrecken.

11. Bohrwerkzeug nach Anspruch 9 oder 10,
gekennzeichnet durch
einen leicht bananenartig gekrümmten, in Spanablaufrichtung (12) zunächst etwa radial zur Bohrerachse (17) ausgerichteten und mit zunehmender Entfernung von der zugeordneten Hauptschneide (6) von der Bohrerspitze (8) weggebogenen Verlauf der Führungsrippen (19).

## Claims

1. Drilling tool, in particular drill which is designed with disposable cutting members which form the drill bits and has a drill body and flutes which are recessed therein for the removal of chips, characterized in that the chip-shaping area (22), which approximately in the chip-removal direction (12) laterally adjoins the faces (11) of the drill lips (6), is formed by at least one separate wear-resistant body (14).

2. Drilling tool according to Claim 1, characterized by a releasable arrangement of the wear-resistant body or bodies (14).

3. Drilling tool according to Claim 1 or 2, characterized in that the maximum value of the chip-shaping radius (26), which is active in chip shaping, of the chip-shaping area (22) amounts to a quarter of the difference between the diameter and the web diameter (28) of the drilling tool.

4. Drilling tool according to one of Claims 1 to 3, characterized in that the wear-resistant bodies (14) consist of a sintered carbide or a hard material.

5. Drilling tool according to one of Claims 1 to 4, characterized in that in each case one wear-resistant body (14) lies in a groove-like recess (15), which is open towards the drill point (8), of the flute (4).

6. Drilling tool according to Claim 5, characterized by a wedge-shaped design of the wear-resistant body (14), in such a manner that it is pressed, from the direction of the drill point (8), into a wedge-shaped groove in a form-fitting and frictionally-locking manner.

7. Drilling tool according to one of Claims 1 to 6, characterized by securing screws (16), which are introduced into the drill body from the drill point (8), for fixing the position of the wear-resistant bodies (14).

8. Drilling tool according to one of Claims 1 to 7, characterized by an essentially dovetail-shaped key seat of the wear-resistant body (14) in that part of the drill body which adjoins the flute.

9. Drilling tool according to one of the preceding claims, characterized in that the surface of the wear-resistant body (14) contains guide ribs (19) which act in the manner of runners, are arranged approximately parallel to one another and run essentially in the chip-removal direction (12).

10. Drilling tool according to Claim 9, characterized in that the guide ribs (19) extend over the entire width of the wear-resistant body (14).

11. Drilling tool according to Claim 9 or 10, characterized by the fact that the guide ribs (19) run slightly in the form of a banana, initially being aligned approximately radially with respect to the drill axis (17) in the chip-removal direction (12) and, with increasing distance from the associated lip (6), curving away from the drill point (8).

## Revendications

1. Outil de perçage, comprenant un foret réalisé avec des corps de coupe à usage unique qui forment les tranchants de foret, avec un corps de foret, et des gorges à copeaux ménagées dans celui-ci pour l'évacuation des copeaux,
caractérisé en ce que la région de formage de copeaux (22) qui se raccorde approximativement latéralement, dans la direction de sortie des copeaux (12), aux surfaces de coupe (11) des tranchants principaux de foret (6) est formée par au moins un corps anti-usure séparé (14).

2. Outil de perçage selon la revendication 1, caractérisé en ce que l'agencement du corps anti-usure (14) est détachable.

3. Outil de perçage selon l'une ou l'autre des revendications 1 et 2, caractérisé en ce que la valeur maximum du rayon de formage de copeaux (26) efficace pour la formation des copeaux dans la région de formage de copeaux (22) s'élève à un quart de la différence entre le diamètre et le diamètre au coeur (28) de l'outil de perçage.

4. Outil de perçage selon l'une des revendications 1 à 3, caractérisé en ce que les corps anti-usure (14) sont constitués en un métal dur ou en un matériau dur.

5. Outil de perçage selon l'une des revendications 1 à 4, caractérisé en ce qu'un corps anti-usure respectif (14) est logé dans un évidement (15) de la gorge à copeaux (4), analogue à une gorge et ouvert en direction de la pointe du foret (8).

6. Outil de perçage selon la revendication 5, caractérisé en ce que le corps anti-usure (14) est réalisé en forme de coin, de telle manière qu'il est engagé à la presse en coopération de formes et en coopération de friction dans une gorge en forme de coin, en partant de la pointe du foret (5).

7. Outil de perçage selon l'une des revendications 1 à 6, caractérisé par des vis, de fixation (16), engagées dans le corps de foret en partant de la pointe de foret (8) afin de fier les corps anti-usure (14) en position.

8. Outil de perçage selon l'une des revendications 1 à 7, caractérisé en ce que le corps anti-usure (14) est disposé dans un logement en coin sensiblement en forme de queue d'aronde dans la partie du corps de foret adjacente à la gorge, à copeaux.

9. Outil de perçage selon l'une' des revendications précédentes, caractérisé en ce que la surface du corps anti-usure (14) contient des nervures de guidage (19) agencées approximativement parallèlement les unes aux autres et s'étendant sensiblement dans la direction de sortie des copeaux (12), agissant à la manière de patins coulissants.

10. Outil de perçage selon la revendication 9, caractérisé en ce que les nervures de guidage (19) s'étendent sur la totalité de la largeur du corps anti-usure (14).

11. Outil de perçage selon l'une ou l'autre des revendications 9 et 10, caractérisé en ce que les nervures de guidage (19) présentent un tracé légèrement incurvé en forme de banane, dirigé dans la direction de sortie des copeaux (12) tout d'abord approximativement radialement par rapport à l'axe de foret (17), et incurvé en éloignement de la pointe de foret (8) tandis que la distance depuis le tranchant principal associé (6) augmente.
